# FASCICULE DE BREVET EUROPEEN

(11) **EP 1 644 102 B1**
(45) Date de publication et mention de la délivrance du brevet: **13.12.2006**
(21) Numéro de dépôt: 04767844.6
(22) Date de dépôt: 18.06.2004
(51) Int. Cl.: B01D 53/04, B01D 53/047

(54) **APPAREIL POUR LA SÉPARATION PAR ADSORPTION À VARIATION DE PRESSION D'AU MOINS UN CONSTITUANT D'UN MÉLANGE GAZEUX**
VORRICHTUNG ZUR ABTRENNUNG MINDESTENS EINES BESTANDTEILS EINES GASFÖRMIGEN GEMISCHS DURCH DRUCKWECHSELADSORPTION
DEVICE FOR THE SEPARATION OF AT LEAST ONE CONSTITUENT OF A GASEOUS MIXTURE BY PRESSURE SWING ADSORPTION

(30) Priorité: 02.07.2003 FR 0308029
(43) Date de publication de la demande: 12.04.2006
(73) Titulaire: L'air Liquide Société Anonyme pour l'étude et l'exploitation des procédés Georges Claude, 75321 Paris Cédex 07 (FR)
(72) Inventeur: BARBIER, Anne, F-78150 Le Chesnay (FR); BRES, Jérôme, F-75012 Paris (FR); FOURAGE, Sylvain, F-92130 Issy-Les-Moulineaux (FR); VIGOR, Xavier, F-75015 Paris (FR)
(74) Mandataire: Pittis, Olivier
(86) Numéro de dépôt international: PCT/FR2004/050282
(87) Numéro de publication internationale: WO 2005/005023

(56) Documents cités:
- EP-A- 1 080 772
- US-A- 5 176 721

## Description

La présente invention concerne les appareils pour la séparation par adsorption à variation de pression d'au moins un constituant d'un mélange gazeux de type dits « PSA » ou « VSA », comprenant, dans une enceinte d'orientation générale verticale comportant un dôme supérieur, au moins une masse d'adsorbant séparant une première chambre verticale recevant le mélange gazeux à séparer d'une seconde chambre verticale collectant un mélange gazeux séparé, une paroi flexible, d'extension générale horizontale, étant maintenue plaquée sur l'extrémité supérieure de la masse d'adsorbant par des moyens d'application de pression.

Un appareil de ce type est décrit dans le document US-A-5 176 721 (HayNigor), au nom de la Demanderesse. Dans ce type d'appareil, où la circulation des gaz s'effectue horizontalement, la membrane tasseuse sépare un volume supérieur à pression sensiblement constante de volumes inférieurs qui subissent de façon alternée des variations de pression parfois notables. Il en résulte une sollicitation à la fatigue des parties structurantes de l'appareil (dans la pratique : des parties métalliques mécano-soudées telles que grilles, tôles, plaques, viroles, tubes, fonds) qui nécessitent un surdimensionnement (épaisseur, classes de soudures, précision des ajustements) qui obère considérablement les coûts de fabrication et d'installation.

La présente invention a pour objet de proposer un agencement d'appareil permettant de réduire les coûts de fabrication et d'assemblage mais aussi de reconditionner aisément les parcs d'appareils existants pour en augmenter notablement la durée de vie opérationnelle.

Pour ce faire, selon une caractéristique de l'invention, l'appareil comporte des moyens pour piloter la pression dans le volume entre la paroi flexible et le dôme.

Selon des caractéristiques plus particulières de l'invention :
- le volume supérieur entre la paroi flexible et le dôme est placé en communication avec l'une desdites première et deuxième chambres,
- l'appareil comporte en outre des moyens de lestage de la paroi flexible,
- l'appareil comporte une canalisation reliant le volume supérieur à la seconde chambre,
- l'appareil comporte un passage entre le volume et la première chambre,
- la masse d'adsorbant est annulaire, les première et deuxième chambres étant concentriques.

Avec l'agencement selon l'invention, la pression dans le volume supérieur n'est plus constante mais est pilotée en fonction des pressions de procédé dans l'adsorbant, typiquement équilibrée avec une des pressions de fonctionnement en amont ou en aval de l'adsorbant, ce qui élimine ainsi substantiellement les efforts parasites transmis jusqu'à présent par la paroi flexible sur le reste de la structure de l'appareil.

D'autre part, l'aménagement de la canalisation ou du passage de communication peuvent s'effectuer sans modification substantielle des architectures d'appareils existants.

D'autres caractéristiques et avantages de la présente invention ressortiront de la description suivante de modes de réalisation, donnés à titre illustratif mais nullement limitatifs, faite en relation avec les dessins annexés, sur lesquels :
- la figure 1 représente, en coupe verticale, un premier mode de réalisation d'un appareil selon l'invention ; et
- la figure 2 représente, en coupe verticale partielle, un deuxième mode de réalisation d'un appareil selon l'invention.

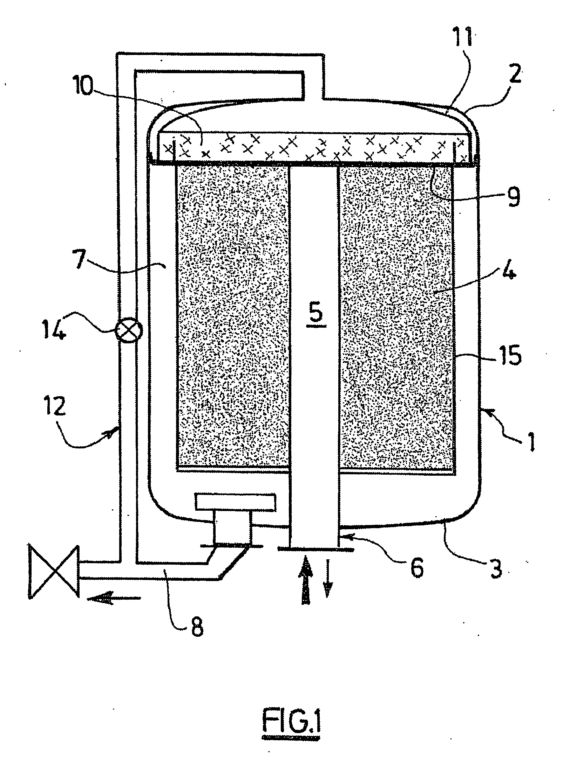

Dans le mode de réalisation représenté sur la figure 1, on reconnaît un adsorbeur radial avec, dans une enceinte cylindrique 1 d'axe vertical comprenant un dôme supérieur 2 et un fond inférieur 3, au moins une masse d'adsorbant annulaire 4, coaxiale à l'axe de l'enceinte 1, séparant une chambre intérieure 5 formée par un tube central perforé 6 coaxial à l'axe de l'enceinte 1, d'une chambre périphérique 7 en communication avec le volume inférieur de l'enceinte 1 d'où part une canalisation 8 de sortie, en phase de production, de mélange gazeux de production séparé d'un mélange gazeux d'alimentation introduit par l'extrémité inférieure du tube central 6. En phase de régénération, la masse d'adsorbant 4 est balayée par un mélange gazeux s'échappant avec réduction de pression, par la même extrémité inférieure du tube central 6. L'adsorbant est maintenu extérieurement et séparé de la chambre périphérique 7 par au moins une virole perforée 15 coaxiale à l'axe de l'enceinte 1.

De façon connue en soi, une paroi flexible imperméable ou membrane 9, s'étend horizontalement dans l'enceinte 1 pour recouvrir les extrémités supérieures de la chambre annulaire 7 de la masse annulaire d'adsorbant 4, et du tube central 5.

Dans le mode de réalisation représenté, la membrane 9 est recouverte d'au moins un lit 10 d'éléments individuels ou particulaires formant lest, tels que des billes de métal de verre ou de céramique, et la partie supérieure du volume entre le dôme 2 et la membrane 9 est occupée par une baudruche 11 communiquant, via une canalisation extérieure 12 traversant le dôme 2, avec la canalisation de gaz de production 8. La canalisation comporte une vanne électrocommandée 14 permettant de réguler la pression dans le dôme 2 en fonction de paramètres process. Dans ce mode de réalisation, la pression sur la partie supérieure de la membrane 9 « suit » sensiblement la pression du mélange gazeux de production en demeurant, à tout moment du cycle, non inférieure à la pression maximum de process effective dans l'adsorbant 4.

En variante, la canalisation 12 peut simplement déboucher dans le haut du dôme 2 pour pressuriser directement le volume supérieur au-dessus de la membrane 9, l'essentiel de ce volume intérieur étant occupé par des matériaux particulaires de densité inférieure aux matériaux particulaires lestant la membrane 9 et superposés à ces derniers,

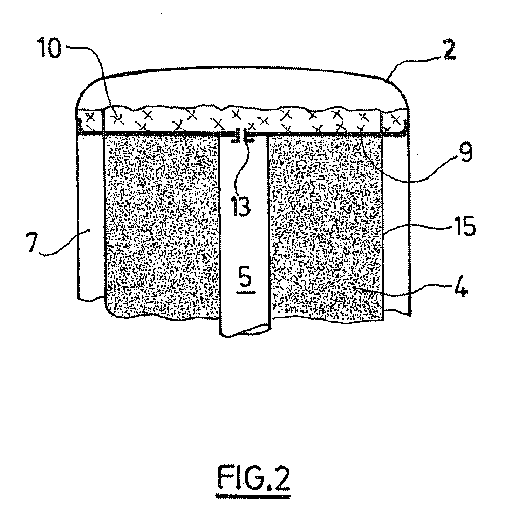

Dans le mode de réalisation de la figure 2, le volume au-dessus de la membrane 9 communique en permanence par au moins un passage calibré 13 avec la chambre intérieure 5 et « suit » ainsi la pression dans cette chambre intérieure 5.

La présente invention convient tout particulièrement pour les appareils de séparation de constituants de l'air, notamment pour la fourniture d'oxygène de pureté supérieure à 90%. Dans ce cas, l'adsorbant 4 contient au moins une zéolite, avantageusement du type LSX, avantageusement une LiLSX, la membrane 9 étant réalisée dans le matériau commercialisé sous la dénomination « Hypalon » et/ou en néoprène.

## Revendications

1. Appareil pour la séparation par adsorption à variation de pression d'au moins un constituant d'un mélange gazeux, comprenant, dans une enceinte (1) d'orientation générale verticale comportant un dôme supérieur (2), au moins une masse d'adsorbant (4) séparant une première chambre verticale (5) recevant le mélange gazeux à séparer d'une seconde chambre verticale (7) collectant un mélange gazeux séparé, une paroi flexible (9) d'extension générale horizontale étant maintenue plaquée sur l'extrémité supérieure de la masse d'adsorbant (4) par des moyens d'application de pression (10,11), **caractérisé en ce qu'**il comporte des moyens (12 ; 14) pour piloter la pression dans le volume entre la paroi flexible (9) et le dôme (2).

2. Appareil selon la revendication 1, **caractérisé en ce que** le volume entre la paroi flexible (9) et le dôme (2) est placé en communication (12 ;13) avec l'une desdites première et deuxième chambres.

3. Appareil selon la revendication 1 ou 2, **caractérisé en ce qu'**il comporte en outre des moyens (10) de lestage de la paroi flexible (9).

4. Appareil selon l'une des revendications 2 et 3, **caractérisé en ce qu'**il comporte une canalisation (12) reliant ledit volume à la seconde chambre (7).

5. Appareil selon l'une des revendications 2 et 3, **caractérisé en ce qu'**il comporte un passage (13) entre ledit volume et la première chambre (5).

6. Appareil selon des revendications précédentes, **caractérisé en ce que** la masse d'adsorbant (4) est annulaire, les première (5) et deuxième (7) chambres étant concentriques.

7. Appareil selon l'une des revendications précédentes, pour la séparation de composants de l'air, l'adsorbant comportant au moins une zéolithe.

## Claims

1. Apparatus for separating at least one component of a gas mixture by pressure swing adsorption, comprising, in a generally vertical vessel (1) comprising an upper dome (2), at least one adsorbent mass (4) separating a first vertical chamber (5) receiving the gas mixture to be separated, from a second vertical chamber (7) collecting a separated gas mixture, a generally horizontal flexible wall (9) being pressed against the upper end of the adsorbent mass (4) by pressing means (10, 11), **characterized in that** it comprises means (12; 14) for controlling the pressure in the volume between the flexible wall (9) and the dome (2).

2. Apparatus according to Claim 1, **characterized in that** the volume between the flexible wall (9) and the dome (2) communicates (12; 13) with one of said first and second chambers.

3. Apparatus according to either of Claims 1 and 2, **characterized in that** it further comprises means (10) for ballasting the flexible wall (9).

4. Apparatus according to either of Claims 2 and 3,
**characterized in that** it comprises a line (12) connecting said volume to the second chamber (7).

5. Apparatus according to either of Claims 2 and 3, **characterized in that** it comprises a passage (13) between said volume and the first chamber (5).

6. Apparatus according to one of the preceding claims, **characterized in that** the adsorbent mass (4) is annular, and the first (5) and second (7) chambers are concentric.

7. Apparatus according to one of the preceding claims, for separating components of air, the adsorbent comprising at least one zeolite.

## Patentansprüche

1. Gerät zur Trennung mindestens eines Bestandteils aus einem Gasgemisch durch Adsorption mit Druckvariation, umfassend in einem Raum (1) von allgemeiner vertikaler Ausrichtung, umfassend eine obere Kuppel (2), mindestens eine Adsorbiermittelmasse (4), die eine erste vertikale Kammer (5), die das zu trennende Gasgemisch von einer zweiten vertikalen Kammer (7), die ein getrenntes Gasgemisch sammelt, trennt, wobei eine flexible Wand (9) mit einer allgemeinen horizontalen Ausdehnung an das obere Ende der Adsorbiermittelmasse (4) durch Mittel (10, 11) zum Anlegen eines Drucks angedrückt gehalten wird, **dadurch gekennzeichnet, dass** es Mittel (12; 14) umfasst, um den Druck in dem Volumen zwischen der flexiblen Wand (9) und der Kuppel (2) zu steuern.

2. Gerät nach Anspruch 1, **dadurch gekennzeichnet, dass** das Volumen zwischen der flexiblen Wand (9) und der Kuppel (2) in Verbindung (12; 13) mit der ersten oder der zweiten Kammer angeordnet ist.

3. Gerät nach Anspruch 1 oder 2, **dadurch gekennzeichnet, dass** es ferner Mittel (10) zum Beschweren der flexiblen Wand (9) umfasst.

4. Gerät nach einem der Ansprüche 2 und 3, **dadurch gekennzeichnet, dass** es einen Kanal (12) umfasst, der das Volumen mit der zweiten Kammer (7) verbindet.

5. Gerät nach einem der Ansprüche 2 und 3, **dadurch gekennzeichnet, dass** es einen Durchgang (13) zwischen dem Volumen und der ersten Kammer (5) umfasst.

6. Gerät nach den vorhergehenden Ansprüchen, **dadurch gekennzeichnet, dass** die Adsorbiermittelmasse (4) ringförmig ist, wobei die erste (5) und die zweite Kammer (7) konzentrisch sind.

7. Gerät nach einem der vorhergehenden Ansprüche zur Trennung von Bestandteilen der Luft, wobei das Adsorbiermittel mindestens einen Zeolith umfasst.
